# EUROPÄISCHE PATENTSCHRIFT

(11) **EP 1 892 124 B1**
(45) Veröffentlichungstag und Bekanntmachung des Hinweises auf die Patenterteilung: **22.12.2010**
(21) Anmeldenummer: 07114489.3
(22) Anmeldetag: 17.08.2007
(51) Int. Cl.: B60B 29/00

(54) **Abzieheinrichtung für Felgen**
Removal device for wheel rims
Dispositif d'extraction pour jantes

(30) Priorität: 25.08.2006 DE 202006013059 U
(43) Veröffentlichungstag der Anmeldung: 27.02.2008
(73) Patentinhaber: Zeitler, Walter, 95163 Weissenstadt (DE)
(72) Erfinder: Zeitler, Walter, 95163 Weissenstadt (DE)
(74) Vertreter: Pröll, Jürgen

(56) Entgegenhaltungen:
- DE-U1- 8 004 282
- US-A- 3 571 887
- US-A- 6 012 211

## Beschreibung

Die Erfindung betrifft eine Abzieheinrichtung für eine an einer Trägerscheibe an einer Nabe eines Fahrzeuges angeschraubte Felge unter Verwendung mindestens eines Gewindeteils.

Es ist hinlänglich bekannt, dass die Kraftfahrzeugräder nach dem Lösen der Radmuttern nicht von den Radmitnehmern bzw. Trägerscheiben, die an den Naben befestigt sind, abgenommen werden können, weil die Felgen an den Trägerscheiben festsitzen. Dies kann durch Korrosion bewirkt sein oder aber auch durch die hohe Verpressung durch die Radmuttern oder Radschrauben. Diese Erscheinung tritt nicht nur bei PKW-Rädern beim Abziehen der Räder für die Umstellung von Winter- auf Sommerbetrieb auf, sondern insbesondere auch bei Lastkraftwagen und anderen größeren Fahrzeugen und bei Pannen, wenn ein Reifen keine Luft aufweist und ausgetauscht werden muss. Die Haftung ist insbesondere durch die Einwirkung von Schmutzwasser und im Winter auch durch die Einwirkung von gesprühter Lauge und gestreutem Salz gegeben, welche die Korrosion beschleunigen. Da Trägerscheibe, Radmutter, Radbolzen oder Radbefestigungsschrauben und Felge in der Regel aus unterschiedlichen Materialien bestehen, wird die Korrosion beschleunigt. Dieser Umstand führt zu einem Festfressen der miteinander verbundenen Teile, insbesondere an den Anlageflächen der Felge an der Trägerscheibe.

Das beschriebene Problem der Anhaftung ist sowohl bei Stahlfelgen als auch bei Aluminium-, also Leichtmetallfelgen, gegeben.

Derart festsitzende Räder werden häufig von Fachpersonal mittels Hammerschlägen gelöst. Dabei können Beschädigungen an den Radaufhängungen, Radlagern und an den Felgen selbst nicht ausgeschlossen werden. Um dies zu vermeiden, sind eine Vielzahl von verschiedenen Abziehvorrichtungen vorgeschlagen worden.

Aus der DE 80 04 282 U1 ist eine Vorrichtung zum Abziehen von Felgen der Kraftfahrzeugräder von Radnaben bekannt, die aus einem Winkeleisen aus Flachstahl besteht, in dessen einem Schenkel im Endbereich sich eine Gewindebohrung befindet, in die eine Schraube einschraubbar ist. Der abgerundete kürzere Schenkel ist als Haltegriff vorgesehen. Diese Abziehvorrichtung ist nur in Verbindung mit Felgen verwendbar, die aus Stahlblech geformt sind und Seitendurchbrüche aufweisen, die oberhalb der Trägerscheibe an der Radnabe enden und in diesem Bereich Befestigungsbohrungen aufweisen. In die so gebildete Durchgangsöffnung wird das Winkeleisen von außen her eingeschoben und danach die Schraube die Belüftungsbohrung durchdringend eingeschraubt. Durch weiteres Drehen der Schraube gelangt die Stirnfläche gegen die Trägerfläche und das Winkeleisen wird gegen die Rückseite der Felge in diesem Bereich gedrückt und das Rad von der Trägerplatte gedrückt. Solche Lüftungsöffnungen sind nur bei wenigen Felgenausführungen vorhanden, so dass die Vorrichtung nur in Verbindung mit diesen bestimmten Felgen einsetzbar ist. Des Weiteren handelt es sich hier um eine Vorrichtung, die aus zwei Teilen besteht und größeren Verwahrungsplatz in Anspruch nimmt und nur in einem bestimmten Größenbereich der Felgen einsetzbar ist.

Aus der DE 297 14 271 U1 ist ein Werkzeug zum Lösen von Kraftfahrzeugrädern, die auf Trägerscheiben auf der Nabe festsitzen, in Form eines Hilfswerkzeuges bekannt, das aus einem stangenförmigen Grundkörper aus quadratischem Hohlprofil besteht, der an seinem einen Ende eine oder mehrere Durchgangsbohrungen in gleichem oder unterschiedlichem Abstand zueinander aufweist, welcher Abstand etwa dem Felgendurchmesser eines Kraftfahrzeugrades entspricht und eine oder mehrere Durchgangsbohrungen aufweist, wobei in jeweils einer der Durchgangsbohrungen ein mit Gewinde versehener Haken eingesetzt ist, der mit einer Spannmutter betätigbar ist. Die Anordnung kann auch als verstellbare Anordnung mit verschiebbarem Hakenträger ausgebildet sein. Es ist ersichtlich, dass eine solche Vorrichtung, die aus mindestens drei Teilen besteht, ebenfalls im Fahrzeug selbst nicht mitführbar ist und deshalb insbesondere bei Pannen nicht eingesetzt werden kann, weil sie einen hohen Platzbedarf und ein hohes Gewicht aufweist.

Dasselbe trifft auch für eine stern- oder kreuzförmige Abziehvorrichtung gemäß der WO 03/018264 A1 zu. Diese Abziehvorrichtung weist ein Abziehkreuz mit Auslegern auf, die länger sind als der Radius des Reifens. An diesem Abziehkreuz werden in den Schenkeln Winkel eingesetzt, die den Reifen hintergreifen. Des Weiteren ist eine Abziehscheibe vorgesehen, die mit Distanzteilen auf die gelösten Radschrauben aufsetzbar ist. Auf die Scheibe drückt die Stirnfläche einer Gewindestange, die in die zentrale Bohrung des Abziehkreuzes eingeschraubt wird. Dadurch ist es möglich, das Rad durch Drehen der Gewindestange, die ein Sechskantschraubenkopf aufweist, auf den ein Drehschlüssel aufsteckbar ist, von der Trägerscheibe abzuziehen. Diese Einrichtung ist sehr aufwendig und kann praktisch nur in einer Werkstatt gehandhabt werden.

Aus der 201 11 613 U1 ist weiterhin eine Felgenabdrückvorrichtung für Kraftfahrzeugfelgen, insbesondere Lastkraftwagenfelgen, anderer Art bekannt. Diese Vorrichtung ist gekennzeichnet durch eine Hülse, eine axiale an der Hülse festgelegte, relativ zur Hülse drehbare Mutter, sowie ein mit der Mutter zusammenwirkendes Schraubenelement, das mittels der Mutter in axialer Richtung bewegbar ist. Die Vorrichtung wird zwischen der Felge - innenseitig am Rad - und einem Träger des Lastkraftwagengestells angebracht. Durch Drehen der Mutter wird die Schraube gegen die Felge gefahren und drückt diese von der Trägerscheibe an der Radnabe ab. Auch hier handelt es sich um eine relativ aufwendige Abdrückvorrichtung.

Der Erfindung liegt die Aufgabe zugrunde, eine besonders einfache und preiswerte Abzieheinrichtung anzugeben, die praktisch in jedem Fahrzeug vorhanden ist oder mitgeführt werden kann, ohne dass diese größeren Lagerraum in Anspruch nimmt oder gewichtsbelastend ist. Des Weiteren soll die Erfindung auch an keine Ausbildungsform von Lüftungslöchern in der Felge gebunden sein.

Die Aufgabe löst die Erfindung durch Ausgestaltung einer Abzieheinrichtung, wie sie im Anspruch 1 angegeben ist.

Vorteilhafte Weiterbildungen der Erfindung sind in den Unteransprüchen 2 bis 9 im Einzelnen angegeben. Im Anspruch 10 ist ein vorteilhaftes Werkzeug für eine Abzieheinrichtung nach Anspruch 1 angegeben und vorteilhafte Ausgestaltungen desselben sind in den weiteren Unteransprüchen 11 und 12 angegeben.

Je nach Ausbildung und Stärke der Felge können die Senkbohrungen zur Aufnahme der Befestigungsschrauben des Rades unmittelbar als vorhandene Bohrung im Sinne der Erfindung genutzt werden, um die Abzieheinrichtung zur Wirkung zu bringen. In diesem Fall kann beispielsweise ein selbstschneidender Gewindeteil, der Bestandteil einer Schraube mit Sechskantkopf oder einer Imbusschraube sein kann, in die vorhandene Bohrung nach dem Herausschrauben der Befestigungsschrauben eingeführt werden. Um eine Beschädigung des Gewindes in der Trägerscheibe zu vermeiden, kann dabei eine Madenschraube in das Gewinde eingeschraubt sein, so dass die untere Stirnfläche des Gewindeteils auf die obere Madenschraubenfläche drückt. Beim selbstschneidenden Einschrauben in die Bohrung drückt das Gewindeteil durch weiteres Drehen die Felge von der Trägerscheibe ab, die an der Nabe befestigt ist und beispielweise auch eine Bremstrommelscheibe sein kann. Die Stirnfläche des Gewindeteils kann auch partiell an der Trägerscheibe anliegen. Die in die vorhandene Bohrung eingesetzte Schraube weist einen größeren Durchmesser auf als der Lochdurchmesser, so dass die notwendige Rückdruckkraft auch ringförmig angreifen kann. Es ist aber auch möglich, wenn die Felgen Lüftungslöcher in Form von Bohrungen aufweisen, in mindestens eine dieser Bohrungen den selbstschneidenden Gewindeteil einzudrehen. Die Stirnfläche drückt dann direkt auf die Trägerscheibe und drückt die Felge ab. Die Gewindegänge sollten keine große Steigung aufweisen, da die Druckkräfte möglichst auf die Rückseite der Felge um die Bohrung herum verteilt sein sollten.

Anstelle einer Madenschraube kann auch ein Zapfen in die freigelegte Sackbohrung für die Befestigungsschrauben eingesetzt werden. Dies ist im Falle der Verwendung einer Belüftungsbohrung nicht erforderlich, da eine unmittelbare Abstützung des Gewindeteils an der Fläche der Trägerscheibe erfolgt. Es ist darüber hinaus aber auch möglich, mindestens eine Bohrung zusätzlich in eine Felge einzubringen. Diese kann dann als Gewindebohrung ausgebildet sein oder es kann in diese auch ein Gewindeeinsatz mit längerem Gewinde, beispielsweise 10 bis 15 mm, eingesetzt werden. Auch in diese Gewindebohrungen oder in die Gewindeeinsätze ist der Gewindeteil einschraubbar und bewirkt unmittelbar, dass die Felge abgedrückt wird. Bei dieser Ausführungsform kann das Gewinde so dimensioniert sein, dass die vorhandenen Befestigungsschrauben für die Felge an der Trägerscheibe direkt verwendet werden können. Im Falle, dass die Felgen auf Radlagerbolzen aufgesteckt sind und mittels Muttern gehalten werden, sind solche Bohrungen zusätzlich vorzusehen, sofern keine Lüftungsbohrungen im Bereich der Trägerscheibe in der Felge vorgesehen sind. Zum Abziehen müssen also nur eine oder zwei Schrauben mitgeführt werden, die dann in die Bohrungen bzw. Gewindebohrungen eingeschraubt werden, um die Felge von der Trägerscheibe zu lösen.

Um eine gleichmäßige Abdruckkraft verteilt über die Fläche zu erzielen, sollten mindestens zwei Gewindeteile in zwei auf einer Umfangsbahn angeordnete Bohrungen bzw. Gewindebohrungen eingeschraubt werden, die um 180° versetzt und symmetrisch zur Mittenachse der Nabe ausgerichtet sind. Insbesondere bei Verwendung von Gewindeeinsätzen ist dabei keine Unwucht des Rades gegeben. Es können aber auch sternförmig die Bohrungen und Gewindebohrungen verteilt angeordnet sein, beispielsweise um 120° auf einer Umfangslinie versetzt. Die Anordnung hängt jeweils von der Ausbildung der Felge selbst ab.

Bei Rädern mit Scheibenbremsen ist die Trägerscheibe gesondert an der Nabe befestigt und bildet einen sogenannten Nabenflansch. Bei Fahrzeugen mit Trommelbremsen ist die Trägerscheibe zugleich Bestandteil des Gehäuses der Trommelbremse. Auf beide Ausführungsformen ist die Erfindung anwendbar, unabhängig davon, ob Befestigungsschrauben zur Befestigung der Felgen in die Trägerscheibe eingeschraubt werden oder ob die Felgen auf an der Trägerscheibe verteilt angeordneten Radlagerbolzen aufgesetzt werden. Ferner ist sie bei allen Felgen einsetzbar. Beispielhaft seien genannt: Stahlfelgen, Leichtmetallfelgen, Tiefbettfelgen, Humpfelgen, Steilschulterfelgen, Flachbettfelgen.

In einfachster Ausführungsform kann der vorhandene Kreuzschlüssel oder ein Steckschlüssel mit Betätigungshebel, der auch an einer Ratsche befestigt sein kann, zum Eindrehen des Gewindeteils verwendet werden, wenn entsprechende Pass-Stücke, nämlich Sechskantschraubenschlüssel oder Inbusschlüssel, bereitgehalten werden und entsprechende Gegenstücke an den Steck- oder Kreuzschlüsseln vorhanden sind. Es ist aber auch möglich, den Gewindeteil als Bestandteil eines Einsatzes für einen solchen Steckschlüssel auszubilden, so dass der Steckschlüssel oder das Radkreuz mit den angeformten Steckschlüsseln direkt verwendet werden kann. Es ist aber auch möglich, an einem Steckschlüssel für Radschrauben auf der Rückseite beispielsweise ein Gewindeteil vorzusehen, also um 180° versetzt, so dass derselbe Schlüssel sowohl zum Lösen der Radschrauben oder Radmuttern als auch zum Abziehen der Felge durch 180°-Drehung verwendet werden kann. Solche Steckschlüssel können auch Ratschen aufweisen, so dass auch bei verlängertem Betätigungshebel diese zum Einsatz kommen können. Der Gewindeteil wird dann in die entsprechende Gewindebohrung oder Bohrung eingeschraubt, um in beschriebener Art und Weise das Abdrücken der Felge von der Trägerplatte zu bewirken.

Damit die Gewindegänge nicht verschmutzen oder korrodieren, empfiehlt es sich, bei Nichtgebrauch diese durch Stopfen zu verschließen. Es ist ersichtlich, dass die einfachste Form realisierbar ist durch Verwendung der vorhandenen Radschrauben und dass bei anderen Ausführungsformen nur eine oder zwei Schrauben mitgeführt werden müssen, damit auch im Falle einer Reifenpanne durch den Laien die Felge von der Nabe abgedrückt werden kann. Solche Hilfswerkzeuge nehmen keinen Platz in Anspruch und stellen auch keine höhere Gewichtsbelastung dar.

Es versteht sich von selbst, dass bei Anbringung zusätzlicher Bohrungen oder Gewindebohrungen diese in der Felge so eingebracht sein müssen, dass keine Beschädigungen an der Bremstrommel, der Bremsscheibe, Radnabe oder statische Veränderungen an der Felge gegeben sind, die zum Bruch führen können. Die Anbringung hängt also jeweils von der Felgenform ab. Es empfiehlt sich ferner, als Abdrückschrauben gehärtete Schrauben im Bordwerkzeug mitzuführen, um insbesondere beim Einbringen in vorhandene Bohrungen eine Schneidwirkung hierüber zu erzielen, wobei es sich hier nicht um eine Schneidwirkung im Sinne einer Lochvergrößerung oder Materialverdrängung handelt, sondern lediglich darum, die Schraube in die Bohrung so einzuführen, dass ein Gewindegang von der Bohrungswandung verhüllt ist.

Da gemäß der Erfindung in einer Ausführungsform mindestens zwei um 180° versetzt auf einer Umfangsbahn vorgesehene Gewindebohrungen in der Felge vorgesehen sind, bietet sich in weiterer Ausgestaltung der Erfindung an, diese Gewindebohrungen zugleich zum Befestigen einer Felgenabdeckung bzw. einer Radkappe zu verwenden. Zu diesem Zweck muss die Radkappe mit einer entsprechenden Schraubenaufnahme versehen sein, um die Schraube durch das in die Felgenabdeckung einzubringende Loch hindurchstecken und in die Gewindebohrung einschrauben zu können. Es ist ersichtlich, dass durch die sich eröffnende Nutzung der Schrauben für eine weitere Funktion, nämlich zum Halten der Felgenabdeckung, die Felgenabdeckungen viel einfacher gestaltet werden können als bisher.

Die Felgenabdeckungen bekannter Art bestehen aus Kunststoff und weisen rückseitig vorstehende Halter auf, um die ein Federring gelegt ist, über den eine Verbindung mit der Felge durch Aufdrücken der Halter hergestellt wird. Allein die Montage des Federringes ist relativ aufwendig. Des Weiteren können die vorstehenden zungenförmigen Ansätze zur Aufnahme des Ringes insbesondere durch Alterungsprozess leicht abbrechen. Dasselbe ist auch gegeben, wenn die Felgenabdeckung bzw. Radkappe nicht gleichförmig auf die Felge gesetzt und aufgedrückt wird. Die Befestigung nach der Erfindung mittels entsprechender Schrauben, die in die vorhandenen Gewindebohrungen eingeschraubt werden, bietet zudem die Gewähr, dass auch dann, wenn beispielsweise ein Fahrer mit seinem Fahrzeug an eine Bordsteinkante gerät, die Radkappe, die bei bekannten Ausführungen nur durch die Ringfeder gehalten ist, nicht von der Felge abspringen kann, sondern dass sie stets von den Schrauben gesichert gehalten ist. Zudem kann die Felgenabdeckung als runde Scheibe ausgebildet sein. Wenn die Schraube an der Oberseite nicht in Erscheinung treten soll, empfiehlt es sich, angespritzte Senken zur Aufnahme der Schraubenköpfe vorzusehen. Auf einer Umfangsbahn verteilt sind beispielsweise zwei Senken für zwei Schrauben vorgesehen. Sind hingegen vier Gewindebohrungen in der Felge vorgesehen, die um jeweils 90° versetzt sind, so können auch vier Schrauben zur Befestigung der Radkappe vorgesehen sein.

Die Vorteile der Erfindung liegen auf der Hand. So sind Beschädigungen am Reifen ausgeschlossen, ebenso ist eine Beschädigung an der Felge nicht gegeben. Auch treten keine Beschädigungen am Gewinde der Befestigungsschrauben auf. Die erfindungsgemäße Ausbildung kann von jedermann bedient werden, sie ist selbst bei Pannen einsetzbar, so dass das Rad auch dann, wenn es äußerst fest sitzt, abgezogen werden kann. Auch kann im Falle der Zuhilfenahme eines Pannendienstes die Einrichtung problemlos eingesetzt werden. In der Werkstatt braucht keine gesonderte größere Einrichtung vorhanden zu sein. Die Erfindung ist auf alle Felgentypen, z. B. Stahlfelgen, Aluminiumfelgen und andere Leichtmetallfelgen, anwendbar. Sie kann darüber hinaus bei allen Fahrzeugtypen mit Radschrauben und Radmuttern bei LKW's, PKW's, Kleintransportern, Anhängern aller Art, usw. verwendet werden. Der Herstellungs- und Kostenaufwand ist gering, bei Nutzung vorhandener Bohrungen sogar kostenfrei.

Die Erfindung wird nachfolgend anhand der in den Zeichnungen dargestellten Ausführungsbeispiele ergänzend erläutert.

In den Zeichnungen zeigen:
- FIG 1: einen vereinfachten Mittenschnitt durch eine Bremstrommel mit daran befestigter Felge mit einer Abzieheinrichtung nach der Erfindung,
- FIG 2: ein Ausführungsbeispiel einer Abzieheinrichtung unter Einsatz einer Madenschraube in vereinfachter Darstellung und
- FIG 3: ein schematisches perspektivisches Ausführungsbeispiel unter Verwendung einer Felge mit Belüftungslöchern.

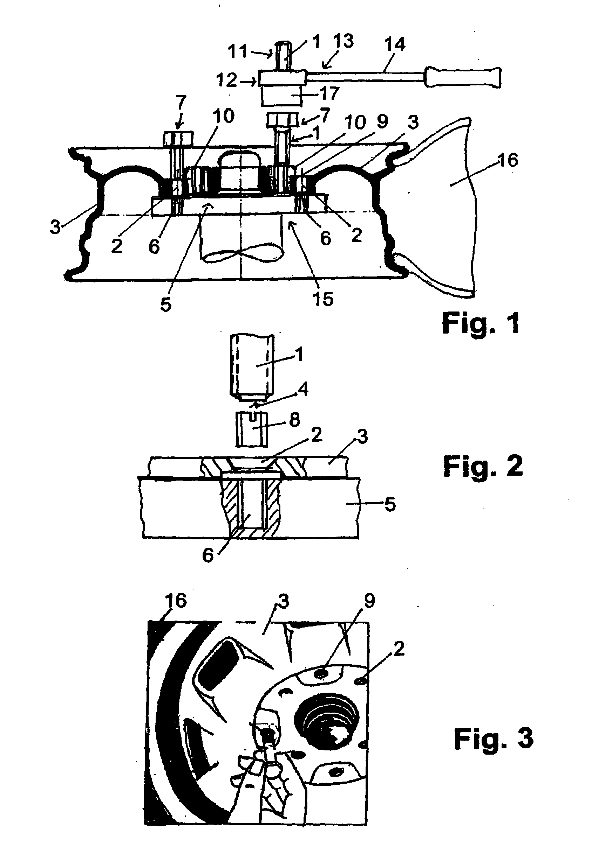

In dem Ausführungsbeispiel in Figur 1 ist ein Nabenflansch 15 dargestellt, der als Trägerscheibe 5 ausgebildet ist und Gewindebohrungen auf einer Umfangsbahn verteilt aufweist, in die die Befestigungsschrauben 7 für die Felge 3 eingeschraubt sind. Die Felge 3 wird dadurch gegen die Trägerscheibe 5 gepresst. Durch Luft- und Wassereintritt in den Zwischenspalt sowie durch Salzwasser und andere Substanzen können Korrosionen entstehen, die die Flächen binden, so dass die Felge nur schwerlich wieder von der Trägerscheibe 5 lösbar ist. Für die Lösung ist eine weitere Bohrung 9 in die Felge eingebracht, und zwar bei deren Herstellung oder nachträglich. In dieser Bohrung 9 ist ein Gewindeeinsatz 10 verdrehsicher befestigt, z. B. durch Annieten. Nach dem Entfernen der Befestigungsschraube 7 aus der Gewindebohrung 6 wird der Gewindeteil 1 der Schraube 7 in den mittigen Gewindeeinsatz 10 eingeschraubt. In diesem Fall kann die vorhandene Befestigungsschraube 7 hierfür verwendet werden. Es ist ersichtlich, dass die untere Stirnfläche der Schraube 7 beim Einschrauben in den Gewindeeinsatz 10 auf die Trägerscheibe 5 drückt und dadurch eine Kraft ausgeübt wird, die ausreichend ist, um die Felge 3 von der Trägerscheibe 5 abzudrücken. Zum weiteren Aufdrehen ist ein Werkzeug in Form eines Ratschenschlüssels 13 vorgesehen, der auch ein anderer Steckschlüssel sein kann. Dieser weist an der einen Seite einen auf den Sechskant der Schraube 7 aufsteckbaren Schlüsselkopf 17 auf und an der anderen Seite in Form eines Schraubenansatzes 11 den Gewindeteil 1, so dass er auch, wenn ein anderes Gewinde im Gewindeeinsatz 11 verwendet wird, hier als Abziehmittel direkt verwendet werden kann, indem der Gewindeteil 1 in das Gewinde des Gewindeeinsatzes 10 gedreht wird. Der Schraubenschlüssel 13 weist eine Ratsche 12 auf. Auf diese kann aber auch verzichtet werden. An der Ratsche 12 befindet sich ein Betätigungshebel 14. Auf die Felge 3 ist ein Reifen 16 aufgezogen.

Um die vorhandenen Bohrungen für die Aufnahme der Befestigungsschrauben zugleich für das Ablösen der Felge 3 von der Trägerscheibe 5 mitnutzen zu können, ist in Figur 2 dargestellt, dass in die Gewindebohrung 6 für die Befestigungsschraube 7 eine Madenschraube 8 einschraubbar ist, die leicht versenkt eingeschraubt wird. Durch die keilförmige Ausbildung der Aufnahmebohrung 2 für die Befestigungsschraube 7 ist eine V-förmige, untere innere Randausbildung gegeben. In diese kann ein Gewindeteil 1 direkt eingeschraubt werden. Bereits nach einem Gang Eindrehen des Gewindeteils wird auch hierüber die Felge 3 von der Trägerscheibe 5 gelöst, da die Stirnfläche 4 gegen die Madenschraube 8 drückt. Der Gewindeteil 1 kann auch gehärtet sein, damit eine gewisse Einschneidwirkung beim Eindrehen gegeben ist. Es ist aus der Abbildung ersichtlich, dass keine Materialveränderungen bewirkt werden, sondern lediglich die V-förmige Kante leichter in den Gewindegang des Gewindeteils eintreten kann.

In Figur 3 ist eine Felge dargestellt, die bereits zusätzlich zu den Bohrungen 2 für die Aufnahme der Befestigungsschrauben 7 Belüftungsbohrungen 9 aufweist. In diese Belüftungsbohrungen kann ein Gewinde eingeschnitten sein oder aber auch eine selbstschneidende Schraube eingeschraubt werden, die mit der Stirnfläche gegen die dahinter befindliche Trägerscheibe drückt und darüber nach dem Entfernen aller Befestigungsschrauben die Felge 3 ebenfalls abdrückt. Die eingezeichneten Finger einer Hand zeigen dabei, dass auf einfachste Weise der Gewindeteil 1 der Schraube 7 in die Belüftungsbohrung 9 eingeschraubt werden kann.

### Bezugszeichenliste:

- 1.: Gewindeteil
- 2.: Bohrung
- 3.: Felge
- 4.: Stirnfläche
- 5.: Trägerscheibe
- 6.: Gewindebohrung
- 7.: Befestigungsschraube
- 8.: Madenschraube
- 9.: Bohrung
- 10.: Gewindeeinsatz
- 11.: Schraubenansatz
- 12.: Drehwerkzeug
- 13.: Steck- oder Ratschenschlüssel
- 14.: Betätigungshebel
- 15.: Nabenflansch
- 16.: Reifen
- 17.: Schlüsselkopf

## Patentansprüche

1. Abzieheinrichtung für eine an einer Trägerscheibe an einer Nabe eines Fahrzeuges angeschraubten Felge unter Verwendung mindestens eines Gewindeteils, **dadurch gekennzeichnet, dass** das Gewindeteil (1) in mindestens eine vorhandene Bohrung (2) in der Felge (3) einschraubbar ist und sich mit der Stirnfläche (4) an der Trägerscheibe (5) mindestens partiell und/oder an einer in eine Gewindebohrung (6) in der Trägerscheibe (5) für eine Befestigungsschraube (7) der Felge (3) eingeschraubten Madenschraube (8) oder an einem eingesetzten Zapfen abstützt oder dass mindestens eine gesonderte Gewindebohrung oder mindestens eine Bohrung (9) mit eingesetztem Gewindeeinsatz (10) vorgesehen ist, in die ein Gewindeteil (1) mit der Stirnfläche (4) gegen eine Stützfläche an der Trägerscheibe (5) der Nabe mindestens partiell anliegend einschraubbar ist, wodurch die Felge (3) von der Tragerscheibe (5) der Nabe unmittelbar abdrückbar ist.

2. Einrichtung nach Anspruch 1 für eine Radnabe mit einem Nubenflansch oder einer Bremstrommelscheibe als Trägerscheibe, an welcher Gewindebolzen, auf einer Umfangslinie vorteilt, zum Aufsetzen der Felge mit Bohrungen und zur befestigung der Felge mittels Muttern aus der Fläche vorstehen, **dadurch gekennzeichnet, dass** in der Felge (3) mindestens eine weitere Bohrung oder mindestens eine Gewindebohrung oder mindestens eine weitere Bohrung (9) mit Gewinde oder Gewindeeinsatz (10) zusätzlich vorgesehen ist, in die ein Gewindeteil (1) einschraubbar ist, das mit der Stirnfläche (4) gegen die Trägerscheibe (5) beim Einschrauben drückt und die Felge (3) von der Trägerscheibe (5) abdrückt.

3. Einrichtung nach Anspruch 1 oder 2, **dadurch gekennzeichnet, dass** mindestens zwei symmetrisch zur Mittenachse auf einer Umfangsbahn angeordnete Bohrungen (9) oder Gewindebohrungen oder Bohrungen (9) mit Gewindeeinsätzen (10) in der Felge (3) vorgesehen sind.

4. Einrichtung nach einem der vorhergehenden Ansprüche, **dadurch gekennzeichnet, dass** das Gewindeteil (1) Bestandteil einer Schraube (7) oder das Gewindeteil (1) eines Schraubenansatzes (11) an einem Drehwerkzeug (12) ist.

5. Einrichtung nach Anspruch 1, 2 oder 4, **dadurch gekennzeichnet, dass** bei Befestigung der Felge (3) an einer Trägerscheibe (5) oder an einer Bremstrommelscheibe, in der Sackbohrungen (6) oder Durchgangsbohrungen zur Aufnahme von Befestigungsschrauben (7) vorgesehen sind, oder bei der Befestigung von Felgen, die Gewindebohrungen oder in Bohrungen (9) eingesetzte Gewindeeinsätze mit Innengewinde aufweisen, das der Größe des Schraubengewindes der Befestigungsschraube der Felge (3) entspricht, die Befestigungsschrauben (7) der Felge als Abdrückschrauben verwendbar sind.

6. Einrichtung nach Anspruch 1, 2 oder 3, **dadurch gekennzeichnet, dass** die zusätzlichen Bohrungen oder Gewindebohrungen oder Bohrungen (9) mit Gewindeeinsatz mittels herauslösbarer Stopfen verschließbar sind.

7. Einrichtung nach Anspruch 1, 2 oder 3, **dadurch gekennzeichnet, dass** in die zusätzlichen Gewindebohrungen oder Bohrungen (9) mit Gewindeeinsatz in einer weiteren Nutzung Schrauben zur Befestigung einer Felgenabdeckung einschraubbar sind.

8. Einrichtung nach Anspruch 7, **dadurch gekennzeichnet, dass** die Schrauben nach dem Entfernen der Felgenabdeckungen zugleich als Gewindeeinsatz (10) verwendbar sind.

9. Einrichtung nach Anspruch 4, **dadurch gekennzeichnet, dass** das Gewindeteil (1) als Schraubansatz Bestandteil eines Kreuzschraubenschlüssels oder eines Steck- (13) oder Ratschenschlüssels mit Betätigungshebel (14) ist.

10. Werkzeug zum Abziehen eines Rades von einer Radnabe zur Verwendung bei einer Einrichtung nach einem der vorhergehenden Ansprüche, **dadurch gekennzeichnet, dass** das Gewindeteil als Schraubansatz Bestandteil eines Steckschlüssels (13) zum Lösen der Radmuttern oder Radschrauben ist und in Achsenverlängerung zum Steckschlüsselkopf fest angeordnet oder als Einsatz auswechselbar vorgesehen ist.

11. Werkzeug nach Anspruch 10, **dadurch gekennzeichnet, dass** der Steckschlüssel (13) mittels Betätigungshebel (14) bedienbar ist.

12. Werkzeug nach Anspruch 11, **dadurch gekennzeichnet, dass** der Betätigungshebel an einer Ratsche des Steckschlüssels (13) befestigt ist, die durch mechanische Umschaltung das Gewindeteil (1) nach links oder rechts dreht.

## Claims

1. Removing device for a wheel rim, which is screw-connected with a carrier disc at a hub of a vehicle, with use of at least one threaded member, **characterised in that** the threaded member (1) can be screwed into at least one bore (2) present in the wheel rim (3) and is supported by the end face (4) at the carrier disc (5) at least partly and/or at a grub screw (8) screwed into a threaded bore (6) in the carrier disc (5) for a fixing screw (7) of the wheel rim (3) or at an inserted pin or that at least one special threaded bore or at least one bore (9) with an inserted thread insert (10) is provided, into which a threaded member (1) can be screwed with the end surface (4) at least partially bearing against a support surface at the carrier disc (5) of the hub, wherein the wheel rim (3) is directly forced off by the carrier disc (5)of the hub.

2. Device according to claim 1 for a wheel hub of a hub flange or a brake drum disc as carrier disc, at which threaded bores distributed on a circumferential line are provided for fitting on of the wheel rim with bores and for fixing the wheel rim by means of nuts from the surface, **characterised in that** additionally provided in the wheel rim (3) is at least one further bore or at least one threaded bore or at least one further bore (9) with a thread or threaded insert (10) into which a threaded member (1) can be screwed, which threaded member presses by the end surface (4) against the carrier disc (5) during screwing in and forces the wheel rim (3) off the carrier disc (5).

3. Device according to claim 1 or 2, **characterised in that** at least two bores (9) or threaded bores or bores (9) with threaded inserts (10) are provided in the wheel rim (3) to be arranged symmetrically with respect to the centre axis and on a circumferential path.

4. Device according to any one of the preceding claims, **characterised in that** the threaded member (1) is a component of a screw (7) or the threaded member (1) is a screw attachment (11) of a rotary tool (12).

5. Device according to claim 1, 2 or 4, **characterised in that** on fixing the wheel rim (3) to a carrier disc (5) or to a brake drum disc in which blind bores (6) or passage bores for reception of fixing screws (7) are provided or during fixing of wheel rims having threaded bores or threaded inserts - with an internal thread - inserted into bores (9), which thread corresponds with the size of the screwthread of the fixing screw of the wheel rim (3), the fixing screws (7) of the wheel rim are usable as screws for forcing off.

6. Device according to claim 1, 2 or 3, **characterised in that** additional bores or threaded bores or bores (9) with threaded insert are closable by means of removable plugs.

7. Device according to claim 1, 2 or 3, **characterised in that**, in a further use, screws for securing a wheel rim cover can be screwed into the additional threaded bores or bores (9) with threaded insert.

8. Device according to claim 7, **characterised in that** the screws after removal of the wheel rim covers are equally usable as threaded insert (10).

9. Device according to claim 4, **characterised in that** the threaded member (1) as screw attachment is a component of a crossbar wrench or a socket wrench (13) or ratchet wrench with an operating lever (14).

10. Tool for removing a wheel from a wheel hub for use in a device according to any one of the preceding claims, **characterised in that** the threaded part as screw attachment is a component of a socket wrench (13) for loosening the wheel nuts or wheel screws and is fixedly arranged in axial prolongation with respect to the socket wrench head or provided as an exchangeable insert.

11. Tool according to claim 10, **characterised in that** the socket wrench (13) is operable by means of an operating lever (14).

12. Tool according to claim 11, **characterised in that** the operating lever is attached to a ratchet of the socket wrench (13), which rotates the threaded member (1) to the left or the right by mechanical switching over.

## Revendications

1. Dispositif de séparation pour une jante vissée au niveau d'un disque support sur un moyeu de véhicule avec utilisation d'au moins une partie filetée, **caractérisé en ce que** la partie filetée (1) peut être vissée dans au moins un forage existant (2) dans la jante (3) et s'appuie avec la surface frontale (4) au disque support (5) au moins partiellement et/ou à une vis sans tête (8) vissée dans un forage fileté (6) dans le disque support (5) pour une vis de fixation (7) de la jante (3), ou encore à un tenon mis en place, ou **en ce qu'**au moins un forage fileté spécial ou au moins un forage (9) avec un embout fileté mis en place (10) est prévu, forage dans lequel il est possible de visser une partie filetée (1) avec la surface frontale (4) reposant au moins partiellement contre une surface d'appui du disque support (5) du moyeu, en quoi la jante (3) peut être directement extraite du disque support (5) du moyeu.

2. Dispositif selon la revendication 1 pour un moyeu de roue avec une flasque de moyeu ou avec un disque de tambour de frein comme disque support, sur lequel des goujons filetés, répartis sur une ligne circonférentielle, débordent de la surface en vue de la pose de la jante avec des forages et en vue de la fixation de la jante au moyen d'écrous, **caractérisé en ce qu'**au moins un autre forage ou au moins un forage fileté, ou encore au moins un autre forage (9) avec filetage ou embout fileté (10) est prévu en supplément dans la jante (3), forage dans lequel une partie filetée (1) peut être vissée, appuyant avec la surface frontale (4) contre le disque support (5) pendant le vissage et extrayant la jante (3) du disque support (5).

3. Dispositif selon une des revendications 1 ou 2, **caractérisé en ce qu'**au moins deux forages (9) ou forages filetés ou forages (9) avec embouts filetés (10) agencés sur une trajectoire circonférentielle de manière symétrique par rapport à l'axe central sont prévus dans la jante (3).

4. Dispositif selon une des revendications précédentes, **caractérisé en ce que** la partie filetée (1) fait partie intégrante d'une vis (7) ou est la partie filetée (1) d'une lame de tournevis (11) sur un outil de tournage (12).

5. Dispositif selon une des revendications 1, 2 ou 4, **caractérisé en ce que**, lors de la fixation de la jante (3) sur un disque support (5) ou sur un disque de tambour de frein, disque dans lequel sont prévus des forages borgnes (6) ou des forages de passage pour l'accueil de vis de fixation (7), ou lors de la fixation de jantes, lesquelles présentent des forages filetés ou des embouts filetés avec filetage femelle mis en place dans des forages (9), le filetage femelle correspondant à la taille du filetage de la vis de fixation de la jante (3), les vis de fixation (7) de la jante peuvent être utilisées comme vis d'extraction.

6. Dispositif selon une des revendications 1, 2 ou 3, **caractérisé en ce que** les forages ou forages filetés ou encore forages (9) avec embout fileté supplémentaires peuvent être fermés au moyen de bouchons extractibles.

7. Dispositif selon une des revendications 1, 2 ou 3, **caractérisé en ce que** des vis peuvent être vissées dans les forages filetés ou forages (9) avec embout fileté supplémentaires pour un autre usage en vue de la fixation d'une couverture de jante.

8. Dispositif selon la revendication 7, **caractérisé en ce que** les vis, après le retrait des couvertures de jantes, sont utilisables dans le même temps comme embout fileté (10).

9. Dispositif selon la revendication 4, **caractérisé en ce que** la partie filetée (1) comme lame de tournevis fait partie intégrante d'une clé cruciforme ou d'une clé à douille (13) ou encore d'une clé à cliquet avec levier d'activation (14).

10. Outil de séparation d'une roue d'un moyeu de roue en vue de l'utilisation sur un dispositif selon une des revendications précédentes, **caractérisé en ce que** la partie filetée comme lame de tournevis fait partie intégrante d'une clé à douille (13) pour le desserrage des écrous de roue ou des vis de roue, est agencée de manière fixe dans le prolongement d'axe par rapport à la tête de la clé à douille ou est prévue comme embout échangeable.

11. Outil selon la revendication 10, **caractérisé en ce que** la clé à douille (13) est actionnable au moyen d'un levier d'activation (14).

12. Outil selon la revendication 11, **caractérisé en ce que** le levier d'activation est fixé à un cliquet de la clé à douille (13), cliquet permettant de faire tourner la partie filetée (1) vers la gauche ou vers la droite grâce à une commutation mécanique.
